# EUROPÄISCHE PATENTSCHRIFT

(11) **EP 3 277 470 B1**
(45) Veröffentlichungstag und Bekanntmachung des Hinweises auf die Patenterteilung: **14.09.2022**
(21) Anmeldenummer: 16711181.4
(22) Anmeldetag: 13.03.2016
(51) Int. Cl.: B27B 5/34

(54) **KAPPSÄGE FÜR EINE SCHNEIDEMASCHINE**
CHOP SAW FOR A CUTTING MACHINE
SCIE À TRONÇONNER POUR UNE MACHINE À COUPER

(30) Priorität: 28.03.2015 EP 15161551
(43) Veröffentlichungstag der Anmeldung: 07.02.2018
(73) Patentinhaber: D. Swarovski KG, 6112 Wattens (AT)
(72) Erfinder: SCHWEIGL, Johannes, 6414 Mieming (AT); KARGER, Joachim, 6134 Vomp (AT); LINDENTHALER, Gerhard, 6408 Pettnau (AT); MIMM, Andreas, 6020 Innsbruck (AT); SCHIFFMANN, Peter, 6133 Weerberg (AT)
(74) Vertreter: Moore, Michael Richard
(86) Internationale Anmeldenummer: PCT/EP2016/055385
(87) Internationale Veröffentlichungsnummer: WO 2016/156018

(56) Entgegenhaltungen:
- EP-A1- 1 252 957
- AT-U1- 11 019
- DE-A1- 3 715 578
- DE-B- 1 159 622
- DE-U1-202006 017 955

## Beschreibung

### GEBIET DER ERFINDUNG

Die Erfindung betrifft eine Kappsäge für eine Schneidmaschine nach dem Oberbegriff des Patentanspruchs 1.

### STAND DER TECHNIK

Kappsägen für Schneidmaschinen sind bekannt. Im Allgemeinen umfasst die Kappsäge einen Träger, welcher ein Sägeblatt bzw. eine Sägezahnscheibe unbewegbar aufnimmt. Der Träger ist mit der Schneidmaschine drehfest verbunden und eine rotierende Welle der Schneidmaschine treibt die Kappsäge an, wobei diese dann rotierend ein Werkstück zerspanen oder kappen kann.

Ein wesentlicher Unterscheid zwischen einer Kappsäge und einer Kreissäge ist eine Bearbeitungs- bzw. Arbeitsrichtung der Sägen bezüglich eines Rohlings bzw. Werkstücks. Weist beispielsweise der Rohling bzw. das Werkstück eine Längsachse auf, deren Richtung der Arbeitsrichtung der Kreissäge entspricht, ist die Arbeitsrichtung der Kappsäge quer zu dieser.

Aus der Offenlegungsschrift DE 32 18 562 A1 geht beispielsweise eine Kreissäge für eine Schneidmaschine hervor. Das Sägeblatt weist einen schleifkornbesetzten Flächenabschnitt zur Verzögerung einer Abstumpfung des Sägeblattes auf.

Aus der Gebrauchsmusterschrift DE 20 2004 009 761 U1 geht eine Kappsäge mit einem Träger und einem Sägeblatt hervor, wobei der Träger und das Sägeblatt zur Herstellung einer drehfesten Verbindung miteinander verklebt und verschweißt sind.

Die Gebrauchsmusterschriften AT 11 019 U1 und DE 20 2006 017 955 U1 offenbaren jeweils eine Vorritzeinrichtung für eine Kreissäge mit zwei Sägeblättern. Die Vorritzeinrichtungen dienen einer Vermeidung von Ausrissen und/oder Abplatzungen bei einem Sägevorgang, wobei typischerweise die Vorritzeinrichtung eine der Kreissäge entgegen gesetzte Drehrichtung aufweist. Die Sägeblätter der Vorritzeinrichtung sind parallel zueinander ausgebildet und weisen einen gleichen Außendurchmesser auf. Des Weiteren sind sie zur Ausbildung von Ritznuten geringer Tiefe, jedoch nicht zum Kappen, das heißt zum vollständigen Abtrennen ausgebildet.

Der EP 1 252 957 A1 ist eine Kreissäge mit einem Ketten- bzw. Riemenantrieb zu entnehmen. Die Kreissäge weist zwei parallel zueinander angeordnete Sägeblätter auf, wobei jedes Sägeblatt mit Hilfe einer Punktverschweißung an einem ihm zugeordneten Träger befestigt ist. Zwischen den beiden asymmetrisch ausgebildeten Trägern, welche einander zugewandt angeordnet sind, ist der Antrieb ausgebildet, wobei die beiden Träger mit einer Schrauben-Mutter-Verbindung mit dem Antrieb verbunden sind.

Die DE 37 15 578 A1 offenbart einen Kreissägekopf für eine Kreissäge. Die Kreissäge weist zwei Sägeblätter auf und ist zur Herstellung eines äußeren Seitenbrettes und eines inneren Seitenbrettes aus einem Holzstamm in einem einzigen Durchgang ausgebildet. Damit ein Verklemmen des inneren Seitenbrettes zwischen beiden Sägeblätter vermieden wird, ist es notwendig, dass beide Sägeblätter einen gleichen Außendurchmesser aufweisen.

Der DE 1159 622 B kann ein Zerspanwerkzeug für Holz entnommen werden. Da es sich bei dem Zerspanwerkzeug um ein Frässcheiben aufweisendes Werkzeug handelt, welches zur Zerspanung vorgesehen ist, sind Zähne der Frässcheiben über den Umfang versetzt zueinander an ihrer Frässcheibe angeordnet. Jedoch sind zur Herbeiführung einer lückenlosen Schnittbreite die Zähne in ihrer axialen Ausrichtung zueinander sich überschneidend ausgebildet.

Allerdings sind zur Herstellung von Werkstücken, wie beispielsweise Würfel oder Prismen aus einem Rohling bei Einsatz der bekannten Kappsägen mehrere Arbeitsschritte notwendig. Dadurch ist die Herstellung der Würfel oder Prismen zeitaufwendig und kostenintensiv.
EP 1 252 957 A1 (GLOBE-INVENT AKTIEBOLAG [SE]), in Absatz [0001], bezieht sich auf ein "Werkzeugeinheit für eine Schneid- oder Sägemaschine, umfassend mindestens ein scheibenförmiges Werkzeug mit einer ersten Seite, einer zweiten Seite, einem Umfangskantenabschnitt, der der Arbeitsteil des Werkzeugs ist, und mindestens einem Antriebselement, das koaxial zum Werkzeug ist" (gemäß einer maschinellen Übersetzung davon).
DE 37 15 578 A1 (GEBRUDER LINCK MASCHINENFABRIK GATTERLINCK [DE]), in den Zeilen 29 bis 32 der Spalte 2, bezieht sich auf "einen Kreissägekopf zum Absägen von Seitenbrettern von Holzstämmen oder Modeln, mit mindestens einem Kreissägeblatt, das einen Kranz von Sägezähnen aufweist". DE 37 15 578 A1 offenbart eine Kappsäge nach dem Oberbegriff des Anspruchs 1.

Aufgabe der vorliegenden Erfindung ist es, eine Kappsäge für eine Schneidmaschine bereitzustellen, welche kompakt ausgebildet ist.

### BESCHREIBUNG DER ERFINDUNG

Die Aufgabe wird erfindungsgemäß durch eine Kappsäge für eine Schneidmaschine mit den Merkmalen des Patentanspruchs 1 gelöst. Vorteilhafte Ausgestaltungen der Erfindung sind in den jeweiligen Unteransprüchen angegeben.

Die erfindungsgemäße Kappsäge füreine Schneidmaschine, mit einer Drehachse, weist eine kreisförmige erste Sägezahnscheibe und einen die erste Sägezahnscheibe aufnehmenden ersten Träger auf. Die erste Sägezahnscheibe besitzt eine Mehrzahl von Sägezähnen, welche über ihrem Umfang und/oder an ihren Planflächen angeordnet sind. Der erste Träger ist entlang der Drehachse symmetrisch ausgebildet. Die erste Sägezahnscheibe ist an einer zweiten Trägerfläche des ersten Trägers positioniert, welche von einer ersten Trägerfläche abgewandt ausgebildet ist. Die Kappsäge weist eine zweite Sägezahnscheibe auf, welche parallel zur ersten Sägezahnscheibe angeordnet ist. Die Kappsäge umfasst einen zweiten Träger und der zweite ist Träger zur Aufnahme der zweiten Sägezahnscheibe ausgebildet. Der zweite Träger und der erste Träger sind koaxial ausgebildet. Der zweite Träger ist in Richtung der Drehachse überwiegend den ersten Träger umfassend ausgestaltet. Zwischen der ersten Sägezahnscheibe und der zweiten Sägezahnscheibe ist ein axialer Abstand ausgebildet. Der erste Träger weist an der ersten Trägerfläche einen Haltedorn zur Aufnahme der Kappsäge in einem Maschinenfutter der Schneidmaschine auf. Ein äußerer erster Scheibendurchmesser der ersten Sägezahnscheibe ist kleiner ausgebildet als ein äußerer zweiter Scheibendurchmesser der zweiten Sägezahnscheibe.

Üblicherweise besitzen Kappsägen eine einzige Sägezahnscheibe. Aufgrund der mehrfachen Anzahl Sägezahnscheiben, welche parallel zueinander angeordnet sind, wird die Anzahl der Verfahrensschritte zur Herstellung von Werkstücken wie beispielsweise Prismen oder Würfel reduziert.

Ein äußerer erster Scheibendurchmesser der ersten Sägezahnscheibe ist kleiner ausgebildet als ein äußerer zweiter Scheibendurchmesser der zweiten Sägezahnscheibe, so dass die erste Sägezahnscheibe in einem sägezahnfreien Bereich der zweiten Sägezahnscheibe positioniert werden kann. Dies führt zu einer kompakten Bauweise der Kappsäge.

Bei der Bestimmung der Scheibendurchmesser ist insbesondere darauf zu achten, dass der erste Scheibendurchmesser relativ zum zweiten Scheibendurchmesser nicht zu klein ausgebildet wird, damit ein Unterschied zwischen Schnittgeschwindigkeiten der beiden Sägezahnscheiben nicht zu groß wird.

Ein weiterer Vorteil ist, dass das Abführen der Werkstücke in Form von Quader, Würfel oder Prismen mit einem während des Kappvorganges eingesetzten Kühlschmiermittel erleichtert und ein Verklemmen der Werkstücke zwischen den Sägeblättern vermieden werden kann.

Insbesondere ist die erste Sägezahnscheibe, welche den ersten Scheibendurchmesser aufweist, der kleiner ist als der zweite Scheibendurchmesser, das Bauteil der Kappsäge, welches eine unterste Fläche der Kappsäge bereitstellt. Die unterste Fläche ist als die vom Haltedorn abgewandt ausgebildet Fläche der Kappsäge anzusehen. Im Betrieb ist die unterste Fläche die dem Rohling am Nächsten gegenüberliegende Fläche der Kappsäge. Die zweite Sägezahnscheibe ist um einen bestimmten Abstand in Richtung des Haltedorns axial zurersten Sägezahnscheibe versetzt. Im Betrieb kappt aufgrund des größeren zweiten Scheibendurchmessers die zweite Sägezahnscheibe demzufolge den Rohling in einer ersten Ebene und die erste Sägezahnscheibe kappt den Rohling in einer zweiten Ebene, wobei die erste Ebene der Kappsäge näher liegt als die zweite Ebene. Die durch die zweite Sägezahnscheibe freigesetzten Werkstücke verlassen aufgrund auftretender Fliehkräfte die Kappsäge in einem äußeren Bereich der Kappsäge bzw. werden von der Kappsäge weggeschleudert. Die durch die erste Sägezahnscheibe freigesetzten Werkstücke verlassen ebenfalls aufgrund auftretender Fliehkräfte die Kappsäge, allerdings ab einem gegenüber dem äußeren Bereich radial nach innen versetzten Bereich der Kappsäge. Sofern nun die Differenz zwischen dem ersten Scheibendurchmesser und dem zweiten Scheibendurchmesser zu groß ist, könnten möglicherweise die Werkstücke zwischen die erste Sägezahnscheibe und die zweite Sägezahnscheibe gelangen und hier verklemmen. Die Scheibendurchmesser sind abhängig von der Werkstückgröße zu ermitteln.

In einer Ausgestaltung ist die erste Sägezahnscheibe mit der zweiten Sägezahnscheibe drehfest verbunden. Der Vorteil ist, dass aufgrund der drehfesten Verbindung gesichert ist, dass eine Drehzahl der ersten Sägezahnscheibe einer Drehzahl der zweiten Sägezahnscheibe entspricht. Somit kann ein einfacher Antrieb und demzufolge ein einfaches Werkzeug realisiert werden.

Ein zweiter Träger ist ausgebildet, welcher die zweite Sägezahnscheibe aufnehmend ausgestaltet ist. Der Vorteil ist, dass die zweite Sägezahnscheibe unabhängig vom ersten Träger ausgebildet werden kann. Somit kann beispielsweise durch einen Austausch des zweiten Trägers auf einfache Weise eine Änderung eines axialen Abstandes zwischen den beiden Sägezahnscheiben herbeigeführt werden. Dies ist nicht möglich, wenn beide Sägezahnscheiben am ersten Träger befestigt sind.

Der zweite Träger und der erste Träger sind koaxial ausgebildet und der zweite Träger ist den ersten Träger in Richtung der Drehachse überwiegend umfassend ausgestaltet. Damit ist ein einfacher Zusammenbau realisiert unter Vermeidung eines falschen Zusammenbaus. Des Weiteren kann durch die koaxiale Ausbildung die Wuchtgüte gesteigert werden.

Zur Weiterführung der kompakten Bauweise des Werkzeugs weist eine zweite Trägerscheibe des zweiten Trägers eine die zweite Trägerscheibe vollständig durchdringende Durchtrittsöffnung auf. Durch diese Durchtrittsöffnung kann der Haltedorn des ersten Trägers geschoben werden. Somit benötigt der zweite Träger keinen eigenen Haltedorn zur Befestigung in der Maschine, sondern kann den Haltedorn des ersten Trägers nutzen. Der erste Träger weist dadurch auch eine Haltefunktion der Kappsäge auf. Der zweite Träger wird einfach auf den ersten Träger aufgezogen und mit diesem drehfest verbunden. So kann der zweite Träger in Form einer Ringscheibe und damit kompakt ausgebildet werden. Ein weiterer Vorteil der Aufnahme der zweiten Trägerscheibe über seine Durchtrittsöffnung am Haltedorn ist eine Zentrierung der zweiten Trägerscheibe am ersten Träger. Somit kann die Wuchtgüte zusätzlich gesteigert werden.

In einer weiteren Ausgestaltung ist die erste Sägezahnscheibe mit dem ersten Träger stoffschlüssig verbunden, sodass eine drehfeste Verbindung auf einfache Weise realisiert ist.

In einer weiteren Ausgestaltung ist die zweite Sägezahnscheibe mit dem zweiten Träger stoffschlüssig verbunden. Dies bedeutet, dass die zweite Sägezahnscheibe ebenfalls auf einfache Weise drehfest mit dem zweiten Träger verbunden ist.

Sind die Sägezahnscheiben auszutauschen, so wird die üblicherweise mit Hilfe eines Klebers herbeigeführte stoffschlüssige Verbindung unter Hitze gelöst, die Fläche des Trägers gereinigt und eine neue Sägezahnscheibe stoffschlüssig mit dem Träger verbunden.

Zur Verwirklichung unterschiedlicher Abstände zwischen der ersten Sägezahnscheibe und der zweiten Sägezahnscheibe ist zwischen dem ersten Träger und dem zweiten Träger ein Distanzhalter angeordnet. In Abhängigkeit des zu trennenden Materials und/oder in Abhängigkeit einer bestimmten Größe der Werkstücke kann mit Hilfe des Distanzhalters auf einfache Weise der Abstand zwischen den Sägezahnscheiben variiert und angepasst werden. Der Distanzhalter, welcher in geeigneter Form lochscheibenartig ausgebildet ist, wird einfach zwischen die beiden Sägezahnscheiben, welche koaxial ausgebildet sind, positioniert, wodurch sich ein axialer Abstand zwischen den Scheiben in Abhängigkeit einer axialen Ausdehnung des Distanzhalters einstellt. Der Distanzhalter selbst ist ebenfalls bevorzugt koaxial mit den Sägescheiben ausgestaltet und kann bei einer ringförmigen Gestalt den Haltearm mittig aufnehmen. Dadurch ist zugleich eine Zentrierung sowohl der zweiten Sägezahnscheibe als auch des Distanzhalters auf dem ersten Träger erlangt.

In einer weiteren Ausgestaltung sind der erste Träger und der zweite Träger kraft- und/oder formschlüssig miteinander verbunden. Eine kraftschlüssige Verbindung ist bevorzugt lösbar auszubilden, wodurch die beiden Träger auch problemlos ausgetauscht werden können. Eine formschlüssige Verbindung kann eine relative Verdrehung zueinander vermeiden, wodurch die drehfeste Verbindung gesichert ist. Eine formschlüssige Verbindung kann beispielsweise durch eine teilweise komplementäre Ausbildung sich gegenüberliegender Flächen des ersten Trägers und des zweiten Trägers herbeigeführt werden.

In einer weiteren Ausgestaltung der erfindungsgemäßen Kappsäge ist ein die zweite Trägerscheibe des zweiten Trägers vollständig umfassender Bund bezüglich einer Symmetrieebene der zweiten Trägerscheibe in seiner in Richtung der Drehachse ausgebildeten Erstreckung asymmetrisch an der zweiten Trägerscheibe positioniert. Dabei ist insbesondere ein sich ausgehend von der Symmetrieebene erstreckender erster Bundabschnitt, welcher auf einer dem Haltedorn zugewandten Trägerfläche der zweiten Trägerscheibe ausgebildet ist, größer ausgeführt als ein von dieser Trägerfläche abgewandt ausgebildeter zweiter Bundabschnitt. Diese Asymmetrie reduziert bzw. verhindert eine Durchbiegung der zweiten Trägerscheibe, welche aufgrund bei hohen Drehzahlen auftretender Fliehkräfte in Erscheinung tritt. Mit anderen Worten wird dadurch eine Stabilität der Kappsäge erzielt.

Weitere Vorteile, Merkmale und Einzelheiten der Erfindung ergeben sich aus der nachfolgenden Beschreibung bevorzugter Ausführungsbeispiele sowie anhand derZeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen innerhalb dem Schutzumfang des Anspruchs 1 zu verwenden. Gleichen oder funktionsgleichen Elementen sind identische Bezugszeichen zugeordnet. Aus Gründen der Übersichtlichkeit ist es möglich, dass die Elemente nicht in allen Figuren mit ihrem Bezugszeichen versehen sind, ohne jedoch ihre Zuordnung zu verlieren. Es zeigen:
- **Fig. 1**: in einem Längsschnitt eine erfindungsgemäße Kappsäge für eine Schneidmaschine,

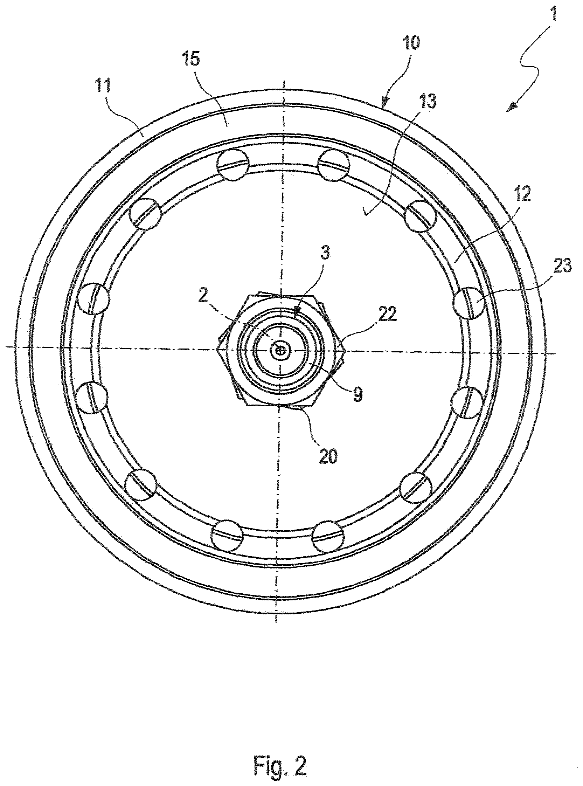

- **Fig. 2**: in einer Draufsicht die Kappsäge gemäß Fig. 1,

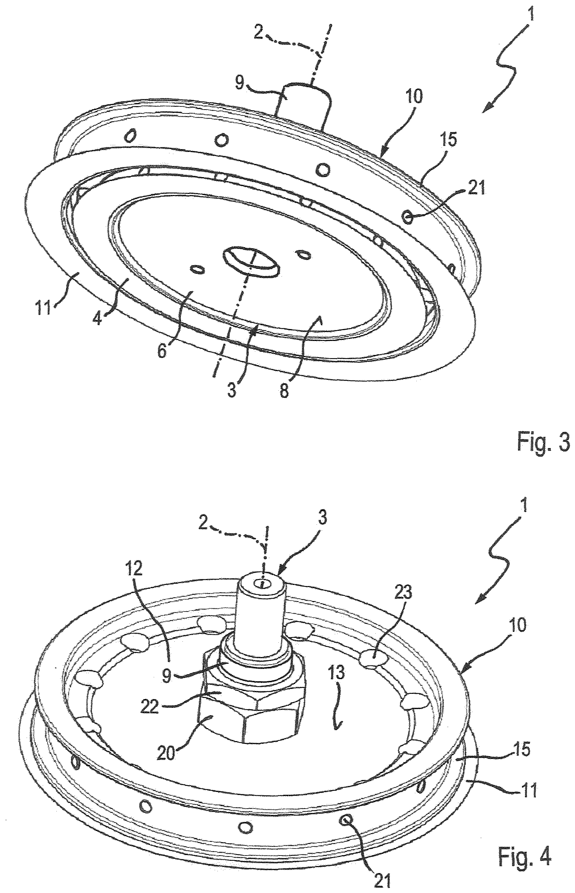

- **Fig. 3**: in einer perspektivischen Darstellung von unten die Kappsäge gemäß Fig. 1,
- **Fig. 4**: in einer perspektivischen Darstellung von oben die Kappsäge gemäß Fig. 1,
- **Fig. 5**: in einem Längsschnitt eine Variante der erfindungsgemäßen Kappsäge für eine Schneidmaschine, und
- **Fig. 6**: in einer Draufsicht die Kappsäge gemäß Fig. 5.

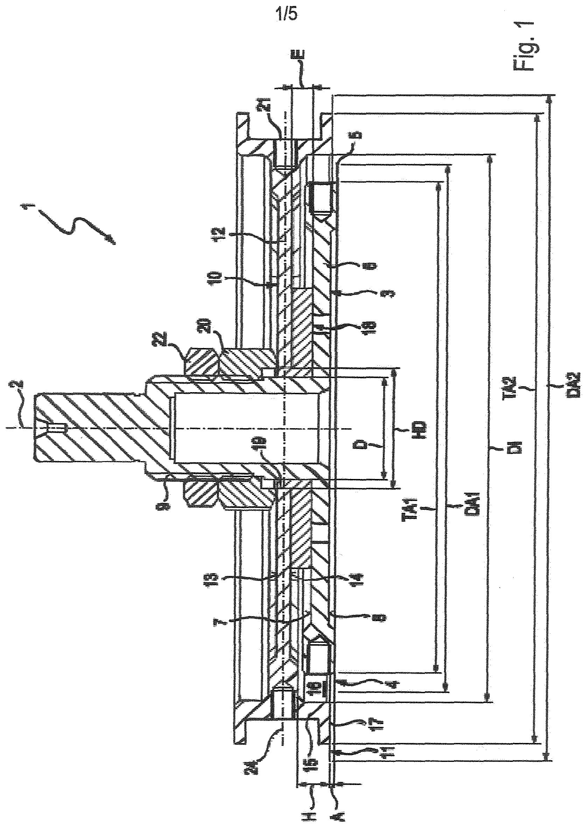

Eine erfindungsgemäße Kappsäge 1 für eine nicht näher dargestellte Schneidmaschine ist gemäß einer in Fig. 1 dargestellten Struktur aufgebaut. Die Kappsäge 1 ist bezüglich ihrer Drehachse 2 symmetrisch ausgebildet. Die Drehachse 2 entspricht in einem Betrieb der Kappsäge 1 mit der Schneidmaschine einer Rotationsachse der Kappsäge 1.

Die Kappsäge 1 weist einen ersten Träger 3 und eine am ersten Träger 3 drehfest aufgenommene erste Sägezahnscheibe 4 auf. Die erste Sägezahnscheibe 4 ist kreisförmig ausgebildet und weist zur Herstellung eines Freischnittes eine Mehrzahl von Sägezähnen 5 auf. Die Mehrzahl von Sägezähnen 5 kann über ihrem Umfang und/oder Planflächen der ersten Sägezahnscheibe 4 ausgebildet sein.

Der erste Träger 3 umfasst eine erste Trägerscheibe 6 mit einer ersten Trägerfläche 7 und einer zweiten Trägerfläche 8. Sie weist an ihrer ersten Trägerfläche 7 einen einstückig mit der ersten Trägerscheibe 6 ausgebildeten Haltedorn 9 auf. Der Haltedorn 9 ist konzentrisch mit der ersten Trägerscheibe 6 angeordnet. Der erste Träger 3 ist bezüglich der Drehachse 2 symmetrisch ausgebildet.

Die erste Sägezahnscheibe 4 ist an der zweiten Trägerfläche 8 aufgenommen, wobei die zweite Trägerfläche 8 von der ersten Trägerfläche 7 abgewandt ist. Mit anderen Worten ist die erste Sägezahnscheibe 4 von dem Haltedorn 9 abgewandt an dem ersten Träger 3 aufgenommen.

Die erste Sägezahnscheibe 4 ist mit dem ersten Träger 3 stoffschlüssig verbunden. Die stoffschlüssige Verbindung kann mit einem geeigneten Klebstoff herbeigeführt werden, wobei bei geeigneten Materialien des ersten Trägers 3 und der ersten Sägezahnscheibe 4 auch eine Verschweißung oder Verlötung der beiden Bauteile 3 und 4 erfolgen kann.

Die Kappsäge 1 umfasst einen zweiten Träger 10. Der zweite Träger 10 ist zur Aufnahme einer zweiten Sägezahnscheibe 11 ausgebildet. Mit Hilfe des zweiten Trägers 10 ist die zweite Sägezahnscheibe 11 parallel zur ersten Sägezahnscheibe 4 anzuordnen. Die zweite Sägezahnscheibe 11 ist kreisförmig ausgebildet und weist zur Herstellung eines Freischnittes ebenfalls, wie die erste Sägezahnscheibe 4, eine Mehrzahl von Sägezähnen 5 auf. Die Mehrzahl von Sägezähnen 5 kann über ihrem Umfang und/oder Planflächen der zweiten Sägezahnscheibe 11 ausgebildet sein.

Zur kompakten Anordnung der ersten Sägezahnscheibe 4 und der zweiten Sägezahnscheibe 11 weist der zweite Träger 10 eine zweite Trägerscheibe 12 auf, an deren Umfang ein sich über eine dritte Trägerfläche 13 der zweiten Trägerscheibe 12 und vierten Trägerfläche 14 erstreckender Bund 15 ausgebildet ist. Mit anderen Worten ist der Bund 15 die zweite Trägerscheibe 12 über deren Umfang umfassend ausgebildet. Mit Hilfe dieses Bundes 15 ist ein erster Hohlraum 16 des zweiten Trägers 10 an der vierten Trägerfläche 14 ausgestaltet, in welchem die erste Trägerscheibe 6 des ersten Trägers 3 anzuordnen ist.

Des Weiteren ist mit Hilfe dieses Bundes 15, an dessen sich über die vierte Trägerfläche 14 erstreckenden ersten Endes 17 die zweite Sägezahnscheibe 11 mit dem zweiten Träger 10 drehfest und stoffschlüssig verbunden ist, ist ein axialer Abstand A zwischen der ersten Sägezahnscheibe 4 und der zweiten Sägezahnscheibe 11 einzustellen. Das heißt, dass in Abhängigkeit einer Bundhöhe H des Bundes 15, welche zwischen der vierten Trägerfläche 14 und der zweiten Sägezahnscheibe 11 ausgebildet ist, ist der Abstand A zwischen der ersten Sägezahnscheibe 4 und der zweiten Sägezahnscheibe 11 ausgebildet.

Der Bund 15 ist bezüglich einer Symmetrieebene 24 der zweiten Trägerscheibe 12 in seiner in Richtung der Drehachse 2 ausgebildeten Erstreckung asymmetrisch an der Trägerscheibe 12 positioniert. Ebenso könnte er auch symmetrisch zur Symmetrieebene 24 an der Trägerscheibe 12 ausgebildet sein.

Zwischen dem ersten Träger 3 und dem zweiten Träger 10 ist ein scheibenformartiger Distanzhalter 18 angeordnet, mit dessen Hilfe der Abstand A zusätzlich variiert werden kann. Entsprechend seiner axialen Erstreckung E ist ein axialer Trägerabstand zwischen der ersten Trägerscheibe 6 und der zweiten Trägerscheibe 12 veränderbar, wodurch der axiale Abstand A zwischen der ersten Sägezahnscheibe 4 und der zweiten Sägezahnscheibe 11 verändert wird.

Die erste Sägezahnscheibe 4 weist einen äußeren ersten Scheibendurchmesser DA1 auf, welcher größer ist als ein äußerer erster Trägerdurchmesser TA1 des ersten Trägers 3. Mit anderen Worten ist die erste Sägezahnscheibe 4 den ersten Träger 3 radial überragend ausgebildet. Die zweite Sägezahnscheibe 11 weist einen äußeren zweiten Scheibendurchmesser DA2 auf, welcher größer ist als ein äußerer zweiter Trägerdurchmesser TA2 des zweiten Trägers 10. Das heißt, die zweite Sägezahnscheibe 11 ist den zweiten Träger 10 radial überragend ausgebildet. Die radiale Erstreckung über den jeweiligen Träger 3, 10 der Sägezahnscheiben 4, 11 ist abhängig von einer zu erzielenden Schnitttiefe.

Zur einfachen Positionierung des ersten Trägers 3 im Hohlraum 16 ist der erste Scheibendurchmesser DA1 der ersten Sägezahnscheibe 4 kleiner als ein erster Innendurchmesser DI des zweiten Trägers 10, welcher mithilfe des Bundes 15 ausgebildet ist. Eine Differenz der beiden Durchmesser ist bevorzugt in Abhängigkeit einer Werkstückgröße zu ermitteln, damit sich während dem Kappen des Rohlings abgetrennte Werkstücke nicht in einen zwischen den beiden Sägezahnscheiben 4, 11 ausgebildeten Zwischenraum ansammeln und möglicherweise verklemmen können.

Der zweite Träger 10 weist eine zentriert positionierte Aufnahmeöffnung 19 zur Aufnahme des Haltedorns 9 auf. Ein Öffnungsdurchmesser D der Aufnahmeöffnung 19 ist größer als ein Haltedornaußendurchmesser HD des Haltedorns 9, so dass der Haltedorn 9 vom zweiten Träger 10 umfasst positioniert ist. Mit anderen Worten ist der zweite Träger 10 den ersten

Träger 3 in Richtung der Drehachse 2 überwiegend umfassend ausgestaltet. Der erste Träger 3 und der zweite Träger 10 sind koaxial ausgebildet.

Zur Herbeiführung einer drehfesten Verbindung zwischen dem ersten Träger 3 und dem zweiten Träger 10 sind der erste Träger 3 und der zweite Träger 10 kraft- und formschlüssig miteinander verbunden. Hierzu ist eine Überwurfmutter 20 an dem Haltedorn 9, diesen umfassend angeordnet. Mit Hilfe der Überwurfmutter 20, welche entlang der Drehachse 2 positionierbar ist, wird der zweite Träger 10 in Richtung der Drehachse 2 gegen den ersten Träger 3 verspannt.

Der Haltedorn 9 ist zur drehfesten Aufnahme der Kappsäge 1 in einem nicht näher dargestellten Maschinenfutter der Schneidmaschine ausgebildet. Eine weitere Überwurfmutter 22 dient einer Sicherung der Überwurfmutter 20.

Über dem Umfang des zweiten Trägers 10 sind Wuchtbohrungen 21 ausgebildet. Diese Wuchtbohrungen 21 dienen einer Herbeiführung einer unwuchtfreien Rotation der Kappsäge 1. Hierzu können beispielsweise in die Wuchtbohrungen 21 nicht näher dargestellte Wuchtmarken eingeführt werden.

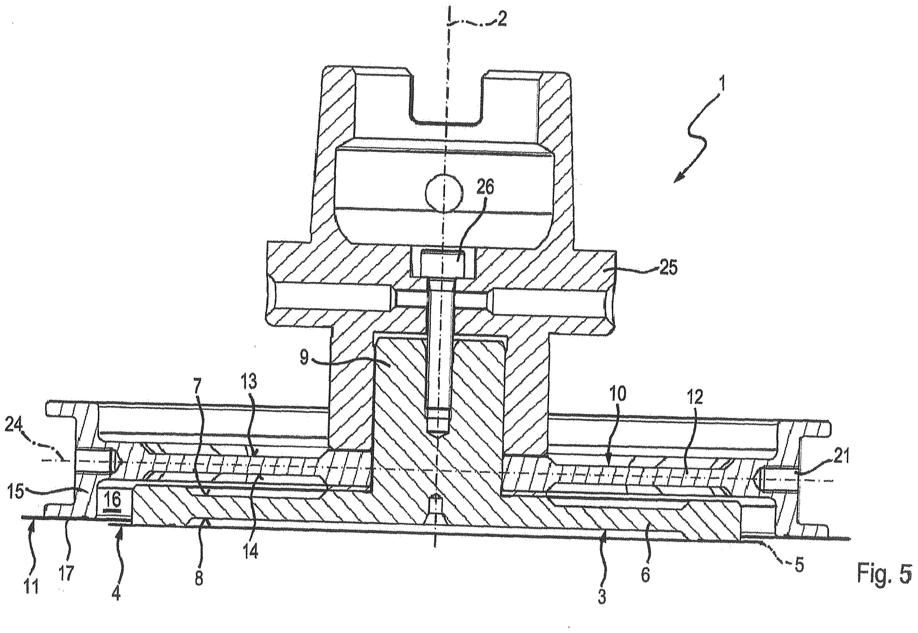

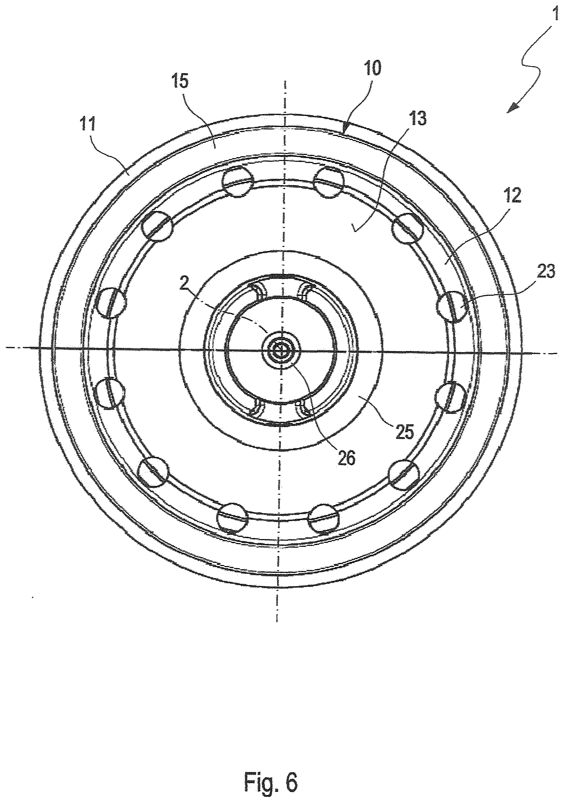

In den Figuren 5 und 6 ist in einem weiteren Ausführungsbeispiel eine Variante der erfindungsgemäßen Kappsäge 1 dargestellt. Der Haltedorn 9 ist in einem kegelförmigen Halteelement 25 verdrehfest aufgenommen. Zur drehfesten Verbindung des Halteelements 25 mit dem Haltedorn 9 und somit zur drehfesten Verbindung des Halteelements 25 mit dem ersten Träger 3 ist ein Sicherungselement 26 das Halteelement 25 mit dem Haltedorn 9 form- und kraftschlüssig verbindend ausgebildet. Das Sicherungselement 26 ist im dargestellten Ausführungsbeispiel in Form einer Innensechskantschraube ausgeführt.

Der zweite Träger 10 weist die zweite Trägerscheibe 12 vollständig durchdringende Durchtrittsöffnungen 23 auf. Im Betrieb der Schneidmaschine mit der erfindungsgemäßen Kappsäge 1 kann ein Kühlschmiermittel unterstützt durch die Schwer- und Fliehkraft über diese Durchtrittsöffnungen 23 der ersten Sägezahnscheibe 4 zugeführt werden. Das Kühlschmiermittel dient einer Kühlung der ersten Sägezahnscheibe 4 und der zweiten Sägezahnscheibe 11. Des Weiteren dient das Kühlschmiermittel einem Abtransport der mithilfe der Kappsäge 1 hergestellten Werkstücke, wie beispielsweise der Prismen oder Würfel.

In einem weiteren nicht näher dargestellten Ausführungsbeispiel weist die Kappsäge 1 einen dritten Träger auf, welcher den zweiten Träger 10 in Richtung der Drehachse 2 überwiegend umfassend ausgestaltet ist.

## Patentansprüche

1. Kappsäge für eine Schneidmaschine, mit einer Drehachse (2) und aufweisend eine kreisförmige erste Sägezahnscheibe (4) und einen die erste Sägezahnscheibe (4) aufnehmenden ersten Träger (3), wobei die erste Sägezahnscheibe (4) über ihren Umfang und/oderan ihren Planflächen eine Mehrzahl von Sägezähnen (5) aufweist, und wobei der erste Träger (3) entlang der Drehachse (2) symmetrisch ausgebildet ist, und wobei die erste Sägezahnscheibe (4) an einer zweiten Trägerfläche (8) des ersten Trägers (3) positioniert ist, welche von einer ersten Trägerfläche (7) abgewandt ausgebildet ist, und wobei die Kappsäge (1) eine zweite Sägezahnscheibe (11) aufweist, welche parallel zur ersten Sägezahnscheibe (4) angeordnet ist, und wobei die Kappsäge (1) einen zweiten Träger (10) umfasst und der zweite Träger (10) zur Aufnahme der zweiten Sägezahnscheibe (11) ausgebildet ist, wobei der zweite Träger (10) und der erste Träger (3) koaxial ausgebildet sind, und wobei der zweite Träger (10) den ersten Träger (3) in Richtung der Drehachse (2) überwiegend umfassend ausgestaltet ist, und wobei zwischen der ersten Sägezahnscheibe (4) und der zweiten Sägezahnscheibe (11) ein axialer Abstand (A) ausgebildet ist, **dadurch gekennzeichnet, dass** der erste Träger (3) an der ersten Trägerfläche (7) einen Haltedorn (9) zur Aufnahme der Kappsäge (1) in einem Maschinenfutter der Schneidmaschine aufweist, und dass ein äußerer erster Scheibendurchmesser (DA1) der ersten Sägezahnscheibe (4) kleiner ausgebildet ist als ein äußerer zweiter Scheibendurchmesser (DA2) der zweiten Sägezahnscheibe (11).

2. Kappsäge nach Anspruch 1, **dadurch gekennzeichnet, dass** die erste Sägezahnscheibe (4) mit der zweiten Sägezahnscheibe (11) drehfest verbunden ist.

3. Kappsäge nach Anspruch 1 oder 2, **dadurch gekennzeichnet, dass** der zweite Träger (10) ausgebildet ist, welcher die zweite Sägezahnscheibe (11) aufnehmend ausgestaltet ist.

4. Kappsäge nach einem der vorhergehenden Ansprüche, **dadurch gekennzeichnet, dass** eine zweite Trägerscheibe (12) des zweiten Trägers (10) eine die zweite Trägerscheibe (12) vollständig durchdringende Durchtrittsöffnung aufweist.

5. Kappsäge nach einem der vorhergehenden Ansprüche, **dadurch gekennzeichnet, dass** die erste Sägezahnscheibe (4) mit dem ersten Träger (3) stoffschlüssig verbunden ist.

6. Kappsäge nach einem der vorhergehenden Ansprüche, **dadurch gekennzeichnet, dass** die zweite Sägezahnscheibe (11) mit dem zweiten Träger (10) stoffschlüssig verbunden ist.

7. Kappsäge nach einem der vorhergehenden Ansprüche, **dadurch gekennzeichnet, dass** zwischen dem ersten Träger (3) und dem zweiten Träger (10) ein Distanzhalter (18) angeordnet ist.

8. Kappsäge nach einem der vorhergehenden Ansprüche, **dadurch gekennzeichnet, dass** der erste Träger (3) und der zweite Träger (10) kraft- und/oder formschlüssig miteinander verbunden sind.

9. Kappsäge nach einem der vorhergehenden Ansprüche, **dadurch gekennzeichnet, dass** ein eine zweite Trägerscheibe (12) des zweiten Trägers (10) vollständig umfassender Bund (15) bezüglich einer Symmetrieebene (24) der zweiten Trägerscheibe (12) in seiner in Richtung der Drehachse (2) ausgebildeten Erstreckung asymmetrisch an der zweiten Trägerscheibe (12) positioniert ist.

## Claims

1. Chop saw for a cutting machine, having an axis of rotation (2) and comprising a circular first saw-tooth disc (4) and a first carrier (3) which receives the first saw-tooth disc (4), the first saw-tooth disc (4) having a plurality of saw teeth (5) over its circumference and/or at its plane surfaces, and the first carrier (3) being formed symmetrically along the axis of rotation (2), and the first saw-tooth disc (4) being positioned on a second carrier surface (8) of the first carrier (3), which second carrier surface is designed to face away from a first carrier surface (7), and the chop saw (1) having a second saw-tooth disc (11) which is arranged in parallel with the first saw-tooth disc (4), and the chop saw (1) comprising a second carrier (10) and the second carrier (10) being designed to receive the second saw-tooth disc (11), the second carrier (10) and the first carrier (3) being coaxial, and the second carrier (10) being designed to predominantly enclose the first carrier (3) in the direction of the axis of rotation (2), and an axial distance (A) being formed between the first saw-tooth disc (4) and the second saw-tooth disc (11), **characterised in that** the first carrier (3) has a holding mandrel (9) on the first carrier surface (7) for receiving the chop saw (1) in a machine chuck of the cutting machine, and that an outer first disc diameter (DA1) of the first saw-tooth disc (4) is smaller than an outer second disc diameter (DA2) of the second saw-tooth disc (11).

2. Chop saw according to claim 1, **characterised in that** the first saw-tooth disc (4) is rotatably connected to the second saw-tooth disc (11).

3. Chop saw according to either claim 1 or claim 2, **characterised in that** the second carrier (10) is formed, which is designed to receive the second saw-tooth disc (11).

4. Chop saw according to any of the preceding claims, **characterised in that** a second carrier disc (12) of the second carrier (10) has a passage opening which completely penetrates the second carrier disc (12).

5. Chop saw according to any of the preceding claims, **characterised in that** the first saw-tooth disc (4) is integrally bonded to the first carrier (3).

6. Chop saw according to any of the preceding claims, **characterised in that** the second saw-tooth disc (11) is integrally bonded to the second carrier (10).

7. Chop saw according to any of the preceding claims, **characterised in that** a spacer (18) is arranged between the first carrier (3) and the second carrier (10).

8. Chop saw according to any of the preceding claims, **characterised in that** the first carrier (3) and the second carrier (10) are frictionally and/or form-fittingly connected to one another.

9. Chop saw according to any of the preceding claims, **characterised in that** a collar (15) which completely encloses a second carrier disc (12) of the second carrier (10) is positioned asymmetrically on the second carrier disc (12) with respect to a plane of symmetry (24) of the second carrier disc (12) in the extension of said collar formed in the direction of the axis of rotation (2).

## Revendications

1. Scie à onglet pour une machine de découpe, présentant un axe de rotation (2) et comportant un premier disque en dents de scie (4) circulaire et un premier support (3) recevant le premier disque en dents de scie (4), dans laquelle le premier disque en dents de scie (4) comporte sur sa circonférence et/ou sur ses surfaces planes, une pluralité de dents de scie (5) et dans laquelle le premier support (3) est formé symétriquement le long de l'axe de rotation (2), et dans laquelle le premier disque en dents de scie (4) est positionné sur une seconde surface de support (8) du premier support (3), laquelle est conçue tournée à l'opposé d'une première surface de support (7), et dans laquelle la scie à onglet (1) comprend un second disque en dents de scie (11), lequel est disposé parallèlement au premier disque en dents de scie (4), et dans laquelle la scie à onglet (1) comprend un second support (10) et le second support (10) est conçu pour recevoir le second disque en dents de scie (11), dans laquelle le second support (10) et le premier support (3) sont coaxiaux, et dans laquelle le second support (10) est conçu de manière à comprendre majoritairement le premier support (3) dans la direction de l'axe de rotation (2), et dans laquelle, entre le premier disque en dents de scie (4) et le second disque en dents de scie (11), une distance (A) axiale est conçue, **caractérisée en ce que** le premier support (3) comporte sur la première surface de support (7) une broche de retenue (9) pour recevoir la scie à onglrt (1) dans un mandrin de machine de la machine de découpe, et qu'un premier extérieur diamètre de disque (DA1) du premier disque en dents de scie (4) est inférieur à un second extérieur diamètre de disque (DA2) du second disque en dents de scie (11).

2. Scie à onglet selon la revendication 1, **caractérisée en ce que** le premier disque en dents de scie (4) est relié solidairement en rotation avec le second disque en dents de scie (11).

3. Scie à onglet selon la revendication 1 ou 2, **caractérisée en ce que** le second support (10) est conçu, lequel est conçu de manière à recevoir le second disque en dents de scie (11).

4. Scie à onglet selon l'une quelconque des revendications précédentes, **caractérisée en ce qu'**un second disque de support (12) du second support (10) comporte une ouverture de passage pénétrant complètement dans le second disque de support (12).

5. Scie à onglet selon l'une quelconque des revendications précédentes, **caractérisée en ce que** le premier disque en dents de scie (4) est relié par liaison de complémentarité de matière au premier support (3).

6. Scie à onglet selon l'une quelconque des revendications précédentes, **caractérisée en ce que** le second disque en dents de scie (11) est relié par liaison de complémentarité de matière au second support (10).

7. Scie à onglet selon l'une quelconque des revendications précédentes, **caractérisée en ce qu'**une entretoise (18) est disposée entre le premier support (3) et le second support (10).

8. Scie à onglet selon l'une quelconque des revendications précédentes, **caractérisée en ce que** le premier support (3) et le second support (10) sont reliés l'un à l'autre par liaison de complémentarité de force ou de forme.

9. Scie à onglet selon l'une quelconque des revendications précédentes, **caractérisée en ce qu'**une collerette (15) comprenant complètement un second disque de support (12) du second support (10) est positionnée par rapport à un plan de symétrie (24) du second disque de support (12) dans son extension formée dans la direction de l'axe de rotation (2) de manière asymétrique sur le second disque de support (12).
